# EUROPÄISCHE PATENTSCHRIFT

(11) **EP 1 763 457 B1**
(45) Veröffentlichungstag und Bekanntmachung des Hinweises auf die Patenterteilung: **06.04.2011**
(21) Anmeldenummer: 05758918.6
(22) Anmeldetag: 18.06.2005
(51) Int. Cl.: B60R 21/01

(54) **AIRBAGAUSLÖSEELEKTRONIK FÜR FAHRZEUGE**
AIRBAG FIRING ELECTRONIC SYSTEM
SYSTEME ELECTRONIQUE DE DECLENCHEMENT D'AIRBAG POUR VEHICULES

(30) Priorität: 07.07.2004 DE 102004032732
(43) Veröffentlichungstag der Anmeldung: 21.03.2007
(73) Patentinhaber: Bayerische Motoren Werke Aktiengesellschaft, 80809 München (DE)
(72) Erfinder: BAUER, Richard, 85276 Pfaffenhofen (DE); URBAHN, Jan, Ramsey, NJ 07446 (US); WEIDNER, Marcus, 82362 Weilheim (DE)
(86) Internationale Anmeldenummer: PCT/EP2005/006605
(87) Internationale Veröffentlichungsnummer: WO 2006/002789

(56) Entgegenhaltungen:
- WO-A-03/006291
- WO-A-2004/029654
- DE-A1- 10 212 902
- DE-A1- 10 247 670
- US-A1- 2004 019 420

## Beschreibung

Die vorliegende Erfindung betrifft ein Fahrzeug mit einer Airbagauslöseelektronik gemäß dem Oberbegriff des Patentanspruches 1.

Eine derartige Auslöseelektronik ist aus der WO 2004/029654 A1 bekannt. Zum technischen Hintergrund der vorliegenden Erfindung zählen ferner die WO 03/006291 A1, US 2004/019420 A1, DE 102 12 902 A1 sowie die DE 102 47 670 A1.

An das Auslöseverhalten von Fahrzeugairbags werden sehr strenge Anforderungen gestellt. Einerseits muss sichergestellt sein, dass das Airbagsystem die bei einem Unfall auftretenden physikalischen Zustände als "Fire-Bedingungen" erkennt und den Airbag sicher auslöst. Andererseits sollten "Misuse-Bedingungen", die eine gewisse Ähnlichkeit zu den für Unfälle charakteristischen physikalischen Bedingungen haben können, sicher von "Fire-Bedingungen" unterschieden werden. Airbagsysteme sind hierfür mit unterschiedlichen Sensoren ausgerüstet, z. B. mit Beschleunigungssensoren, die unfalltypische Beschleunigungen messen, Verformungssensoren, die unfalltypische Bauteilverformungen messen, Luftdrucksensoren, die z. B. den bei einem Seitenaufprall im Türhohlraum auftretenden Luftdruckanstieg messen, etc. Die alleinige Messung und Überwachung der "Ist-Kurven" solcher Signalsignaturen birgt die Gefahr, dass ein Signalverlauf gemessen wird, der auf einen Unfall hindeutet, obwohl kein oder noch kein Unfall vorliegt, was zu Fehlauslösungen des Airbagsystems führen kann. So können beispielsweise kritische Beschleunigungen auftreten, wenn ein Bordstein oder ein Schlagloch mit hoher Geschwindigkeit überfahren wird. Problematisch sind solche Beschleunigungsspitzen vor allem dann, wenn sie kurz vor dem eigentlichen Unfall auftreten. Problematisch ist beispielsweise eine Situation, bei der das Fahrzeug von der Fahrbahn abkommt, über einen Bordstein fährt und der Airbag durch die dabei auftretenden Beschleunigungen ausgelöst wird und das Fahrzeug anschließend gegen ein Hindernis prallt. In diesem Fall besteht die Gefahr, dass der Airbag zu früh gezündet wird und während des eigentlichen Unfalls nicht oder nicht mehr mit voller Leistung zur Verfügung steht.

Aufgabe der Erfindung ist es, ein Fahrzeug mit einer Airbagauslösesensorik zu schaffen, bei der die oben genannten Probleme vermieden werden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Fahrzeug mit einem Airbagsystem und einer Sensoreinrichtung aus, die ein erstes Sensormodul aufweist, das ein Sensieren momentan vorliegender "Ist-Fahrzustände" ermöglicht. Der Begriff "erstes Sensormodul" ist nicht notwendigerweise auf eine bestimmte physikalische Sensoranordnung beschränkt, sondern ganz allgemein als "erste Sensorfunktion" zu verstehen. Auch der Begriff "Ist-Fahrzustand" ist breit auszulegen. So kann vorgesehen sein, dass das erste Sensormodul eine Fahrzeugbeschleunigung in einer vorgegebenen Raumrichtung, eine Bauteilverformung, einem bestimmten Systemdruck o.ä. misst. Dem Airbagsystem ist eine Elektronik zugeordnet, die bei Vorliegen eines Unfallzustandes das Airbagsystem auslöst. Für die Entscheidung, ob ein Unfallzustand vorliegt, wertet die Elektronik Sensorsignale aus, die von der Sensoreinrichtung geliefert werden. Die Elektronik führt dabei einen Vergleich sensierter "Ist-Fahrzustände" mit vorgegebenen als kritisch angesehenen Fahrzuständen durch, die auf einen Unfallzustand hindeuten. Hierzu können in der Elektronik vorgegebene kritische Beschleunigungsgrenzwerte, Druckgrenzwerte, Verformungsgrenzwerte etc. abgespeichert sein.

Der Kern der Erfindung besteht darin, dass die Sensoreinrichtung ein "zweites Sensormodul" aufweist, das vorausschauend Umfeldbedingungen des Fahrzeugs sensiert, die mit einer gewissen zeitlichen Verzögerung zu kritischen Ist-Fahrzuständen führen können. Der Begriff "zweites Sensormodul" ist ebenfalls breit zu verstehen. Bei dem ersten und zweiten Sensormodul kann es sich um zwei verschiedene oder um ein und dieselbe physikalische Sensoreinrichtung handeln. Wesentlich ist, dass das zweite Sensormodul vorausschauend Umfeldbedingungen des Fahrzeugs sensiert, d. h. bevor aus dem Einwirken der Umfeldbedingungen auf das Fahrzeug konkrete Ist-Fahrzustände entstehen. Wenn die Sensorik Umfeldbedingungen erkennt, die zu kritischen Ist-Fahrzuständen führen können, d. h. wenn kritische Ist-Fahrzustände vorhergesehen werden können, und anschließend tatsächlich eintreten, werden diese nicht als Unfall, sondern als unfallfreie Zustände angesehen. Die Erfindung zielt also darauf ab, "Misuse-Bedingungen", wie z. B. das Überfahren eines Bordsteins oder eines tiefen Schlaglochs vorausschauend zu erkennen und die dabei auftretenden "Misuse-Fahrzustände", wie das Überschreiten vorgegebener kritischer Beschleunigungswerte, Schwingungsfrequenzen etc. als logische Folge dieser Misuse-Bedingungen zu werten und nicht als Unfall. Ein "irrtümliches" Auslösen des Airbagsystems unter Misuse-Bedingungen kann dadurch vermieden werden.

Mit einem derartigen Sensorsystem können "Fahrbahnunebenheiten" wie Bordsteine, Schlaglöcher o.ä. erkannt werden, bevor das Fahrzeug darüber hinwegfährt und entsprechende "Signaturen", wie z. B. Quer-, Längs-, oder Vertikalbeschleunigungen im Fahrzeug auftreten, die zu einer irrtümlichen Airbagauslösung führen könnten. Durch das vorausschauende Sensieren derartiger "Signaturen" kann in Abhängigkeit von der Fahrtrichtung und der Fahrgeschwindigkeit der Eintritt kritischer "Ist-Fahrzustände" vorhergesehen werden. Kritische Signaturen können also kurzfristig ausgeblendet bzw. aus dem gemessenen Signalverlauf "herausgerechnet" werden, um ein irrtümliches Auslösen des Airbagsystems zu vermeiden.

Nach einer Weiterbildung der Erfindung weist zweite Sensormodul eine Sensorik zum Abtasten des Umfelds im vorderen Bereich des Fahrzeugs auf. Hiermit kann der vorderhalb der Vorderräder des Fahrzeugs liegende Umfeld- bzw. Fahrbahnbereich abgetastet werden. Die Abtastung kann durch Radarsensoren, optische Sensoren, wie z. B. ein Kamerasystem, durch akustische Sensoren, insbesondere durch Ultraschallsensoren oder durch andere Sensorsysteme erfolgen. Abgetastet werden kann ein Umfeldbereich, der bis zu einem Meter oder bis zu zwei Metern vorderhalb der Vorderräder des Fahrzeugs oder vorderhalb des vorderen Endes des Fahrzeugs liegt.

Nach einer Weiterbildung der Erfindung können die vom zweiten Sensormodul gelieferten Signale für eine aktive Regelung von Fahrzeugsubsystemen verwendet werden. So kann in Fahrsituationen, in denen das Fahrzeug durch einen Bremseingriff aktiv gebremst wird, die Bremskraft an einzelnen oder an allen Fahrzeugbremsen kurz vor Überfahren eines Hindernisses kurzzeitig gelöst oder herabgesetzt werden. Da bei einem Bremsvorgang die Vorderachse aufgrund der dynamischen Achslastverteilung stärker belastet ist als die Hinterachse, würde ein Überfahren eines Hindernisses im gebremsten Zustand zu besonders starken Fahrzeugerschütterungen führen. Durch ein kurzzeitiges Lösen der Bremse bzw. durch ein Herabsetzen des Bremsdrucks an einzelnen oder allen Fahrzeugbremsen kann eine derartige Zusatzbelastung verringert bzw. vermieden werden.

Bei einem Fahrzeug, das mit einem aktiven Federungssystem ausgestattet ist, können die Federcharakteristika der einzelnen Radaufhängungen verändert werden, wenn das zweite Sensormodul Umfeldbedingungen sensiert, die zeitverzögert zu kritischen Ist-Fahrzuständen führen. So kann die Federhärte der Radaufhängungen kurz vor dem Überfahren eines tiefen Schlaglochs kurzzeitig verringert werden.

Sofern das Fahrzeug mit dynamisch verstellbaren bzw. dynamisch regelbaren Lagern ausgestattet ist, können diese ebenfalls in Abhängigkeit von den vom zweiten Sensormodul gelieferten Sensorsignalen und den entsprechenden erwarteten kritischen Ist-Fahrzuständen verstellt werden. So kann beispielsweise die Dämpfungscharakteristik einzelner Lager gezielt in Abhängigkeit von den momentanen Umfeldbedingungen verändert werden. Dynamisch verstellbare Lager können beispielsweise im Bereich des Fahrwerks, der Motoraufhängung oder der Getriebelagerung eingesetzt werden.

## Patentansprüche

1. Fahrzeug mit
einem Airbagsystem,
einer Sensoreinrichtung, die ein erstes Sensormodul aufweist, das ein Sensieren von Ist-Fahrzuständen ermöglicht,
einer Elektronik, die bei Vorliegen eines Unfallzustandes das Airbagsystem auslöst und die zum Auswerten von Sensorsignalen vorgesehen ist, die von der Sensoreinrichtung geliefert werden, wobei die Elektronik einen Vergleich sensierter Ist-Fahrzustände mit vorgegebenen kritischen Fahrzuständen durchführt, die auf einen Unfallzustand hindeuten,
wobei die Sensoreinrichtung ein zweites Sensormodul aufweist, das vorausschauend Umfeldbedingungen des Fahrzeugs sensiert, die mit einer gewissen zeitlichen Verzögerung zu kritischen Ist-Fahrzuständen führen können, **dadurch gekennzeichnet, dass** die Elektronik kritische Ist-Fahrzustände, deren bevorstehender Eintritt vorab von dem zweiten Sensormodul indiziert wurde, als unfallfreie Fahrzustände wertet.

2. Fahrzeug nach Anspruch 1, wobei das zweite Sensormodul eine Sensorik zum Abtasten des Umfelds im vorderen Bereich des Fahrzeugs aufweist.

3. Fahrzeug nach Anspruch 1 oder 2, wobei das zweite Sensormodul eine Sensorik zum Abtasten des Fahrzeugumfeldsbereichs aufweist, der vorderhalb von Vorderrädern des Fahrzeugs liegt.

4. Fahrzeug nach einem der Ansprüche 1 bis 3, wobei das zweite Sensormodul eine Sensorik zum Abtasten des Umfeldbereichs aufweist, der bis zu einen Meter vorderhalb der Vorderräder liegt.

5. Fahrzeug nach einem der Ansprüche 1 bis 4, wobei das zweite Sensormodul eine Sensorik zum Abtasten des Umfeldbereichs aufweist, der bis zu zwei Meter vorderhalb der Vorderräder liegt.

6. Fahrzeug nach einem der Ansprüche 1 bis 5, wobei das zweite Sensormodul eine Sensorik zum Abtasten des Fahrbahnreliefs in einem Bereich aufweist, der vorderhalb der Vorderräder des Fahrzeugs liegt.

7. Fahrzeug nach einem der Ansprüche 1 bis 6, wobei das zweite Sensormodul mindestens einen Radarsensor aufweist.

8. Fahrzeug nach einem der Ansprüche 1 bis 7, wobei das zweite Sensormodul mindestens einen optischen Sensor aufweist.

9. Fahrzeug nach einem der Ansprüche 1 bis 8, wobei das zweite Sensormodul mindestens einen akustischen Sensor, insbesondere einen Ultraschallsensor, aufweist.

10. Fahrzeug nach einem der Ansprüche 1 bis 9, wobei in Fahrsituationen, in denen das Fahrzeug durch Bremseingriff aktiv gebremst wird und in denen das zweite Sensormodul Umfeldbedingungen sensiert, die bei fortwährendem Bremseingriff zu kritischen Ist-Fahrzuständen führen können, die einzelnen Fahrzeugbremsen eingesteuerten Bremsdrücke herabgesetzt werden.

11. Fahrzeug nach einem der Ansprüche 1 bis 10, wobei das Fahrzeug Radaufhängungen mit aktiv regelbaren Feder-/ Dämpfungscharakteristika aufweist, wobei in Fahrsituationen, in denen das zweite Sensormodul Umfeldbedingungen sensiert, die zu kritischen Ist-Fahrzuständen führen können, die Feder-/Dämpfungscharakteristika in Abhängigkeit des zu erwarteten kritischen Fahrzustandes modifiziert werden.

12. Fahrzeug nach einem der Ansprüche 1 bis 11, wobei das Fahrzeug eine Fahrzeugkomponente aufweist, die über ein Lager im Fahrzeug gelagert ist, dessen Lagercharakteristik aktiv regelbar ist, wobei in Fahrsituationen, in denen das zweite Sensormodul Umfeldbedingungen sensiert, die zu kritischen Ist-Fahrzuständen führen können, die Lagercharakteristika in Abhängigkeit des erwarteten kritischen Fahrzustandes modifiziert werden.

## Claims

1. A vehicle
with an airbag system,
a sensor device, which has a first sensor module, which allows a sensing of actual driving conditions,
an electronic system, which triggers the airbag system when an accident condition is present and which is provided to evaluate sensor signals, which are supplied by the sensor device, the electronic system carrying out a comparison of sensed actual driving conditions with predetermined critical driving conditions, which indicate an accident condition,
wherein the sensor device having a second sensor module, which senses in advance environmental conditions of the vehicle, which, with a certain time delay, can lead to critical actual driving conditions, **characterised in that**
the electronic system evaluates critical actual driving conditions, the imminent arrival of which was indicated beforehand by the second sensor module, as crash-free driving conditions.

2. A vehicle according to claim 1, wherein the second sensor module has a sensor system for scanning the environment in the front area of the vehicle.

3. A vehicle according to claim 1 or claim 2, wherein the second sensor module has a sensor system for scanning the environmental area of the vehicle, which is located in front of the front wheels of the vehicle.

4. A vehicle according to any one of claims 1 to 3, wherein the second sensor module has a sensor system for scanning the environmental area, which is located up to one metre in front of the front wheels.

5. A vehicle according to any one of claims 1 to 4, wherein the second sensor module has a sensor system for scanning the environmental area, which is located up to two metres in front of the front wheels.

6. A vehicle according to any one of claims 1 to 5, wherein the second sensor module has a sensor system for scanning the road relief in an area, which is located in front of the front wheels of the vehicle.

7. A vehicle according to any one of claims 1 to 6, wherein the second sensor module has at least one radar sensor.

8. A vehicle according to any one of claims 1 to 7, wherein the second sensor module has at least one optical sensor.

9. A vehicle according to any one of claims 1 to 8, wherein the second sensor module has at least one acoustic sensor, especially an ultrasound sensor.

10. A vehicle according to any one of claims 1 to 9, wherein, in driving situations, in which the vehicle is actively braked by a braking intervention and in which the second sensor module senses environmental conditions, which can lead, with a continuing braking intervention, to critical actual driving conditions, brake pressures actuated at the individual brakes of the vehicle are reduced.

11. A vehicle according to any one of claims 1 to 10, wherein the vehicle has wheel suspensions with actively controllable spring/damping characteristics, wherein, in driving situations, in which the second sensor module senses environmental conditions, which may lead to critical actual driving conditions, the spring/damping characteristics are modified depending on the critical driving condition to be expected.

12. A vehicle according to any one of claims 1 to 11, wherein the vehicle has a vehicle component, which is mounted in the vehicle by means of a bearing, the bearing characteristics of which can be actively controlled, wherein in driving situations, in which the second sensor module senses environmental conditions, which may lead to critical actual driving conditions, the bearing characteristics are modified depending on the critical driving condition expected.

## Revendications

1. Véhicule automobile ayant :
- un système de coussin de sécurité (airbag),
- une installation de capteur ayant un premier module de capteur permettant la détection des états de conduite réels,
- une électronique qui, en cas d'état d'urgence, déclenche le système de coussin de sécurité et fournit les signaux de capteur destinés à être exploités par l'installation de capteur,
* l'électronique effectuant une comparaison entre les états réels de conduite, détectés, et des états critiques de conduite prédéfinis, indiquant un état d'accident,
- l'installation de capteur comporte un second module de capteur qui détecte de manière prévisionnelle les conditions ambiantes du véhicule automobile, et qui peuvent aboutir avec un certain retard à des états de conduite réels, critiques,
véhicule **caractérisé en ce que**
l'électronique exploite des états de conduits réels, critiques, et dont l'imminence de leur arrivée, est indexée au préalable par le second module de capteur utilisé comme état de fonctionnement sans accident.

2. Véhicule automobile selon la revendication 1,
selon lequel
le second module de capteur comporte des capteurs pour détecter l'environnement dans les zones actuelles du véhicule.

3. Véhicule automobile selon la revendication 1 ou 2,
selon lequel
le second module de capteur comporte un capteur de détection de la zone d'environnement du véhicule et qui se situe devant les roues avant du véhicule.

4. Véhicule automobile selon l'une des revendications 1 à 3,
selon lequel
le second module de capteur comporte des capteurs pour détecter la zone d'environnement qui se situe jusqu'à un mètre devant les roues avant du véhicule.

5. Véhicule automobile selon l'une des revendications 1 à 4,
selon lequel
le second module de capteur comporte des capteurs pour détecter la zone d'environnement qui se situe au moins entre un et deux mètres devant les roues avant du véhicule.

6. Véhicule automobile selon l'une des revendications 1 à 5,
selon lequel
le second module de capteur comporte des capteurs pour détecter le relief de trajet d'une zone de mémoire, cette zone se situant devant les roues avant du véhicule automobile.

7. Véhicule automobile selon l'une des revendications 1 à 6,
selon lequel
le second module de capteur comporte au moins un capteur radar.

8. Véhicule automobile selon l'une des revendications 1 à 7,
selon lequel
le second module de capteur comporte au moins un capteur optique.

9. Véhicule automobile selon l'une des revendications 1 à 8,
selon lequel
le second module de capteur comporte au moins un capteur acoustique, notamment un capteur à ultrasons.

10. Véhicule automobile selon l'une des revendications 1 à 9,
selon lequel
dans les situations de conduite dans lesquelles le véhicule est freiné de manière active par une action sur les freins, et dans lesquelles le second module de capteur détecte les conditions de l'environnement qui peuvent aboutir à des états réels critiques du véhicule pour une action de freinage prolongée, la pression des différents freins du véhicule est commandée séparément pour être diminuée.

11. Véhicule automobile selon l'une des revendications 1 à 10,
selon lequel
le véhicule comporte des suspensions de roues ayant des caractéristiques de suspension/amortissement à régulation active et dans les situations de conduite dans lesquelles le second module de capteur détecte des conditions d'environnement susceptibles d'aboutir à des états de conduite réels, critiques, on modifie les caractéristiques de suspension/amortissement en fonction de l'état de conduite critique prévisible.

12. Véhicule automobile selon l'une des revendications 1 à 11,
selon lequel
le véhicule a un composant monté dans le véhicule par l'intermédiaire d'un palier et dont les caractéristiques de palier peuvent être régulées de manière active et dans les situations de conduite dans lesquelles, le second module de capteur détecte des conditions d'environnement pouvant conduire à des états de conduite réels, critiques, les caractéristiques de palier sont modifiées en fonction de l'état de conduite, critique, prévisible.
